# DEMANDE DE BREVET EUROPEEN

(11) **EP 0 540 386 A1**
(43) Date de publication de la demande: **05.05.1993**
(21) Numéro de dépôt: 92402791.5
(22) Date de dépôt: 13.10.1992
(51) Int. Cl.: G02B 6/10, C03B 37/012

(54) **Fibre optique et procédé de fabrication**

(30) Priorité: 29.10.1991 FR 9113315
(71) Demandeur: THOMSON-CSF, 75008 Paris (FR)
(72) Inventeur: Turpin, Marc, F-92045 Paris la Défense (FR); Charasse, Marie-Noelle, F-92045 Paris la Défense (FR); Le Pesant, Jean-Pierre, F-92045 Paris la Défense (FR)
(74) Mandataire: Guérin, Michel

(57) **Abrégé**

Il s'agit d'une fibre creuse comportant tout au long de la fibre, entre chaque évidement (3,4) de la fibre et le coeur, au moins une zone de contrainte (5,6) créant une anisotropie de contrainte soumettant le coeur de la fibre à une contrainte d'extension.

Avantages : Une telle conception de la fibre permet de contrôler le signe de la biréfringence intrinsèque de la fibre.

Applications : Capteur de pression.

## Description

L'invention concerne une fibre optique, une fibre optique biréfringente notamment, et son procédé de fabrication.

Plus particulièrement, l'invention concerne une fibre optique à structure évidée qui permet de contrôler le signe de la biréfringence intrinsèque de la fibre. Cette fibre permet d'optimiser le phénomène de transduction de contraintes lorsque la fibre est utilisée comme capteur de pression.

Les fibres optiques biréfringentes à conservation de polarisation, permettent de propager deux modes propres de polarisations linéaires orthogonales. Suivant les applications un seul ou bien les deux modes sont utilisés. Deux propriétés fondamentales sont alors à considérer :
- la fonction de ligne de transmission d'une onde polarisée linéairement (sur une longueur importante pouvant atteindre plusieurs centaines de mètres). Un seul mode propre est excité ;
- la fonction polarimètre, dans laquelle le retard différentiel de propagation entre les deux modes est exploité (par exemple dans certains capteurs à fibre optique). Les deux modes propres sont excités.

Si la biréfringence intrinsèque d'une fibre optique est obtenue en rompant la symétrie axiale de la fibre, par déformation de la structure coeur-gaine optique ou bien par adjonction de zones de contraintes, il est important de contrôler le signe de la biréfringence pour certaines applications de type capteur.

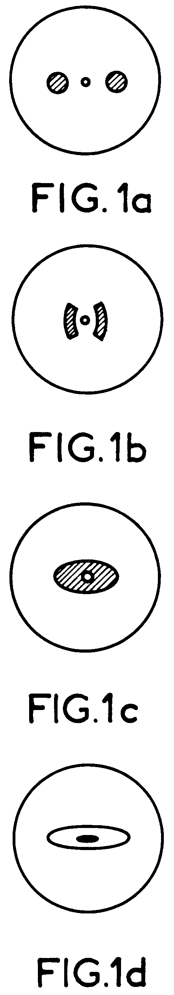

Plus précisément, un certain nombre de fibres biréfringentes sont obtenues par dissymétrie de la répartition interne des contraintes. Par exemple, la fibre possède des zones de contraintes latérales comme cela est représenté en figures 1a et 1b, ou bien la fibre possède un coeur circulaire et une gaine optique elliptique (figure 1c). Une fibre biréfringente peut être également obtenue par la forme très dissymétrique du coeur telle que la fibre à coeur elliptique de la figure 1d.

Par définition de la biréfringence, ces fibres optiques monomodes, au sens spatial du terme, possèdent deux modes propres de polarisation (axe lent et axe rapide). L'axe lent correspond à l'axe géométrique suivant lequel le coeur optique est soumis à des contraintes d'extension (cet axe est défini dans la section droite de la fibre).

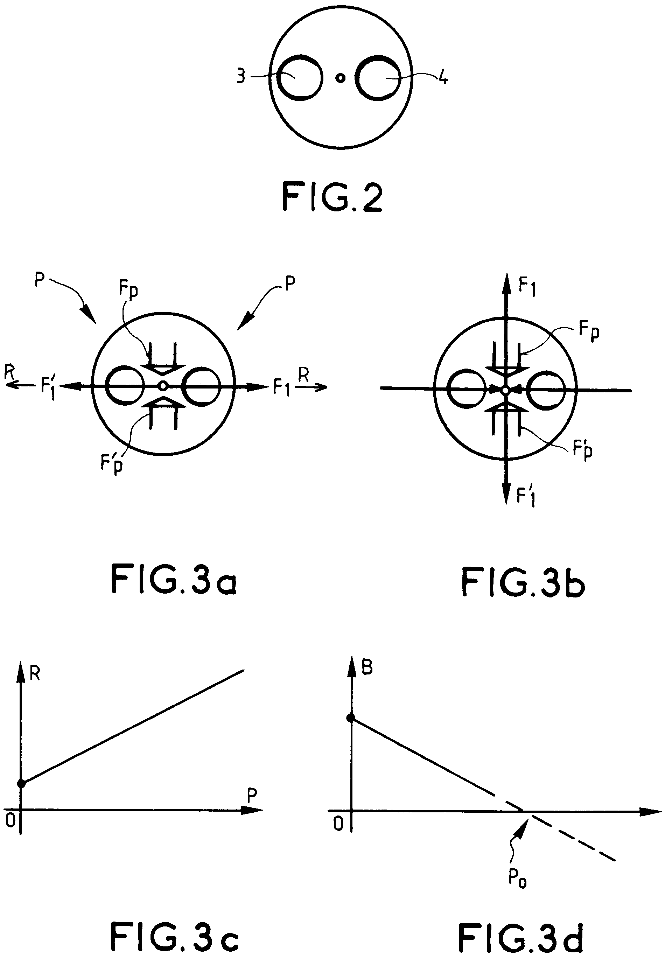

Une structure particulière de fibre optique biréfringente est obtenue en créant deux évidements 3 et 4 (trous) situés de part et d'autre du coeur 1 de la fibre (figure 2). L'intérêt d'une telle fibre est sa sensibilité à l'action d'une pression externe (isotrope ou anisotrope).

Une pression externe isotrope induit au niveau du coeur de la fibre une répartition anisotrope des contraintes créant de la biréfringence par effet élasto-optique qui s'ajoute algébriquement à la biréfringence intrinsèque de la fibre.

Selon la fabrication de la fibre la répartition des contraintes dues aux évidements de part et d'autre du coeur, peuvent avoir pour effet de soumettre le coeur à des contraintes d'extensions dirigées dans un plan contenant sensiblement les centres des évidements.

Ce cas est représenté en figure 3a. Les contraintes d'extension sont F1 et F′1. Une pression extérieure P sur les parois de la fibre s'exerce selon les forces Fp et Fp′. Les forces de pression Fp et F′p se traduisent par des contraintes dirigées selon la direction des contraintes d'extension F1 et F′1 de même sens que celles-ci et viennent s'ajouter à ces contraintes d'extension (résultantes R, R′) ce qui a pour effet d'augmenter la biréfringence comme cela est représenté en figure 3c.

Par contre, si la fabrication de la fibre conduit à une répartition des contraintes dues aux évidements qui se traduit par des contraintes d'extensions perpendiculaires au plan contenant sensiblement des centres des évidements, on a la configuration de la figure 3b. Les effets des contraintes d'extension F1 et F′1 et des contraintes de pression Fp et Fp′ se retranchent alors. Lorsque la pression augmente la biréfringence diminue comme cela est représentée en figure 3d.

Le contrôle du signe de la biréfringence intrinsèque de la fibre apparaît comme un problème de première importance dès lors que la fibre est utilisée comme capteur de pression et, qu'on est tributaire des problèmes de fabrication de la fibre. Pour utiliser les propriétés élastiques de la silice comme phénomène de transduction, dans une gamme de pression la plus étendue possible, il est préférable d'avoir une fonction croissante de la biréfringence en fonction de la pression, c'est-à-dire qu'une élévation de pression externe entraîne une augmentation de la biréfringence. Il est clair que dans le cas inverse, la diminution de la biréfringence en fonction de la pression (croissante) externe tend vers l'annulation de la biréfringence résultante, ce qui a pour effet d'une part de limiter la gamme de mesure potentiel et d'autre part de conduire à une réponse non linéaire lorsque la biréfringence devient trop faible.

L'invention concerne donc une fibre dans laquelle le sens de variation de la biréfringence n'est pas tributaire des difficultés de la fabrication et possédant une variation de la biréfringence croissante en fonction d'une pression extérieure.

L'invention concerne donc une fibre optique comprenant un coeur de guidage compris dans une gaine de guidage d'indice de réfraction inférieur au coeur de la gaine et comprenant à proximité du coeur, tout au long de la fibre, à au moins une cavité, caractérisée en ce qu'elle comprend également, tout au long de la fibre, entre chaque cavité et le coeur de la fibre, une zone de contraintes créant une anisotropie de contraintes et soumettant le coeur de la fibre à une contrainte d'extension.

Selon une variante de réalisation, la zone de contrainte est comprise dans un plan orthogonal au plan comprenant l'axe de la fibre et l'évidement et soumet le coeur de la fibre à une contrainte de compression.

L'invention concerne également un procédé de fabrication de fibre optique selon lequel on fabrique une préforme comprenant une gaine de guidage entourant un coeur de guidage, caractérisée en ce qu'on usine, dans le préforme deux rainures situées de part et d'autre du coeur ; on place dans chaque rainure un barreau en matériau différent de la gaine de guidage ; on recouvre chaque barreau par une plaque en matériau identique à la gaine ; on entoure l'ensemble par un tube d'un matériau identique à la gaine de telle sorte qu'un espace vide existe entre chaque plaque et le tube ; on procède à une opération de fibrage de la préforme.

D'autres procédés de réalisation sont également prévus selon l'invention.

Les différents objets et caractéristiques de l'invention apparaîtront plus clairement dans la description qui va suivre et dans les figures annexées qui représentent :
- les figures 1a à 3d des dispositifs connus dans la technique ;
- les figures 4a à 4c, une fibre optique selon l'invention ;
- les figures 5a à 5d, des étapes du procédé de fabrication de fibre optique selon l'invention ;
- la figure 6, une fibre optique selon le procédé de l'invention.
- la figure 7, une variante de réalisation d'une fibre optique selon l'invention;
- les figures 8a à 8e, un procédé de réalisation de la fibre optique de la figure 7,
- les figures 9 et 10, des variantes du procédé des figures 8a à 8e.

Pour contrôler le signe de la biréfringence intrinsèque de la fibre à structure évidée, ce qui revient à maîtriser les orientations relatives de l'anisotropie de contraintes internes par rapport à la direction qui joint les axes des évidements, l'invention consiste à créer des zones de contraintes additionnelles placées entre le coeur et les évidements. La réalisation de ces zones de contraintes est obtenue en plaçant par exemple de part et d'autre du coeur, des barreaux de silice fortement dopée (par exemple et à titre non limitatif un borosilicate) qui présentent un coefficient d'expansion thermique très différent de celui de la silice. Lors du processus de fibrage, connu de l'homme de l'art, le refroidissement de la structure composite de préforme conduit à une forte anisotropie de contraintes. Au refroidissement, la contraction des barreaux fortement dopés place le coeur sous contraintes d'extension.

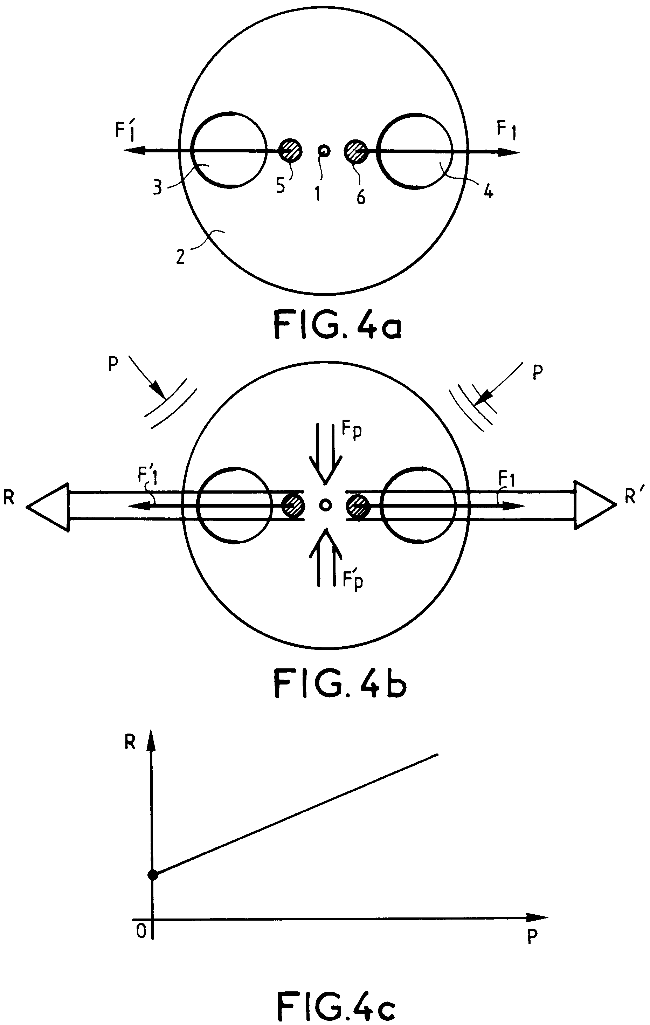

La figure 4a représente une telle fibre comprenant :
- le coeur de la fibre 1 ;
- les évidements 3 et 4 de part et d'autre du coeur 1 ;
- des zones de contraintes 5 et 6 situées respectivement entre les évidements 3 et 4 et de coeur 1.

Les zones de contraintes 5 et 6 créent des contraintes d'extensions F1 et F′1 situées dans un plan passant sensiblement par les centres du coeur 1, des zones de contraintes 5 et 6 et des évidements 3 et 4.

Lorsqu'une pression P s'exerce sur la surface extérieure de la fibre, elle donne lieu à des forces de pression Fp et F′p qui compriment la fibre perpendiculairement à la direction des forces d'extension F1, F′1. Les force Fp, F′p induisent des contraintes colinéaires avec les contraintes d'extension F1 et F′1 et donnent lieu à des résultantes R et R′.

Ces résultantes varient donc avec la pression extérieure P.

Comme cela est représenté en figure 4c, les contraintes d'extension augmentent avec la pression et il en est de même pour la biréfringence.

La fibre optique selon l'invention possède donc un coeur de guidage qui est soumis à des contraintes d'extension dans la direction des évidements. Lorsqu'une pression externe est appliquée à cette fibre, le coeur subit une contrainte de compression dans l'axe orthogonal à l'axe des évidements et par conséquent tend à augmenter la biréfringence intrinsèque de la fibre.

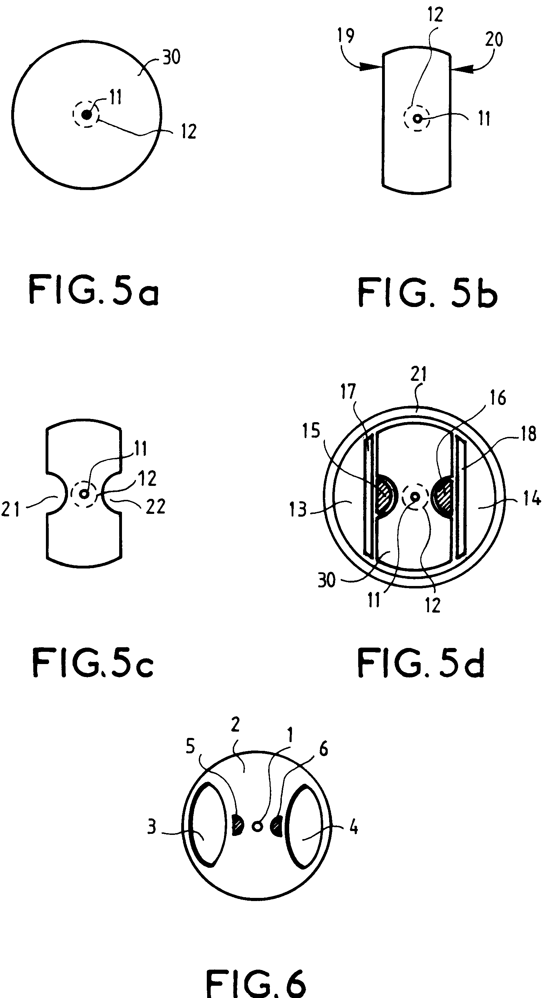

En se reportant aux figures 5a à 5d, on va maintenant décrire un exemple de procédé de fabrication selon l'invention.

Tout d'abord on réalise une préforme, telle que représentée en figure 5a, possédant un coeur de guidage 11 et une gaine de guidage 12 en silice dopée compris dans une matrice 30 en silice. Une telle préforme se présente par exemple selon les techniques actuelles, sous la forme d'un cylindre en silice de plusieurs dizaines de millimètres de diamètre (20 à 25mm par exemple) et plusieurs décimètres de longueurs.

On usine la périphérie de la préforme de façon à faire deux méplats 19 et 20 diamétralement opposés (figure 5b). Dans les méplats on usine deux rainures 21, 22 parallèles à l'axe de la préforme et contenues dans un plan médiant de la préforme (figure 5c).

Ensuite, on loge dans les rainures 21, 22, deux barreaux 15, 16 qui serviront de matériaux de contraintes en silice dopée par exemple. Les barreaux ont a peu près la même forme que les rainures. On dispose sur les méplats 19 et 20, deux plaquettes 17, 18 en même matériau que la matrice 30 (silice). Puis on loge l'ensemble dans un tube 21 en même matériau, lui aussi, que la matrice. On voit donc, sur la figure 5d de l'ensemble obtenu, qu'il reste un espace vide entre les plaquettes 17, 18 et le tube 21.

Enfin, l'ensemble réalisé est soumis à un processus de fibrage connu dans la technique de fabrication des fibres optiques. Ce processus est adapté pour contrôler le facteur de forme de la fibre. Un mode préférentiel de fibrage est décrit dans la Demande de Brevet français n° 89 15872.

A titre d'exemple les barreaux 15,16 servant à faire les zones de contraintes sont en silice dopée bore, aluminium ou germanium, etc...

Dans ce qui précède on contrôle le signe de la biréfringence en provoquant entre le coeur de la fibre et des évidements, des zones de contrainte créant dans le coeur de la fibre des contraintes d'extension.

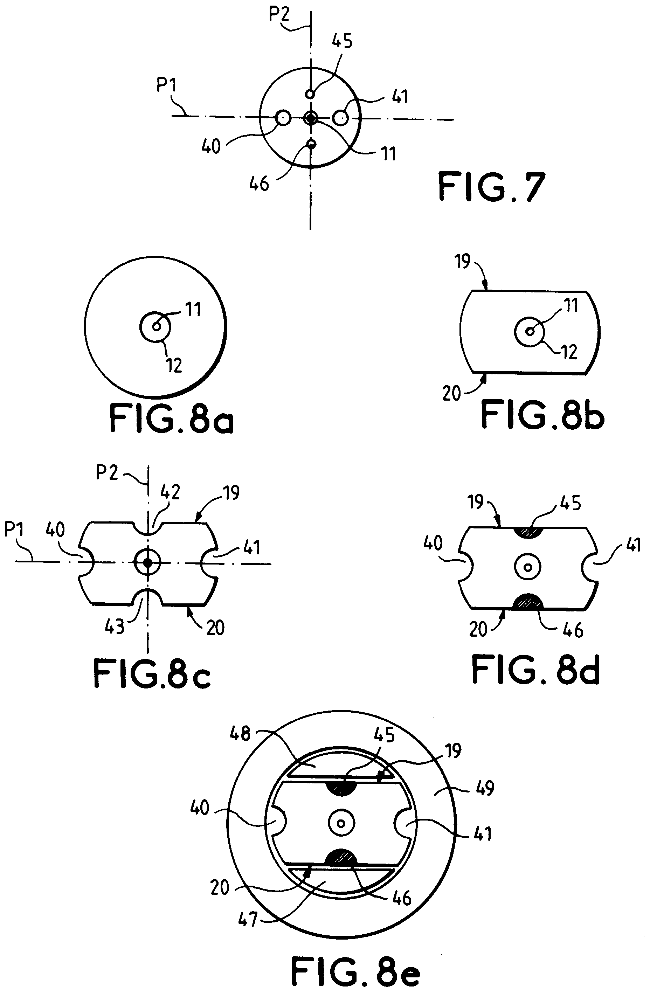

Selon la figure 7, l'invention prévoit également une fibre optique biréfringente possédant deux cavités situées dans un plan axial de la fibre et de part et d'autre du coeur.

Cette fibre possède également dans un plan axial P2 de la fibre perpendiculaire au précédent, deux zones de contraintes (45,46) localisée de part et d'autre du coeur et créant dans celui-ci des contraintes de compression.

Ces zones sont, par exemple, réalisées en silice dopée titane ou tout autre matériaux présentant un coefficient d'expansion thermique inférieur à celui de la silice pure.

En se reportant aux figures 8a à 8e, on va décrire un procédé de réalisation de la fibre de la figure 7.

Une préforme 30 possédant un coeur 11 et une gaine 12, est réalisée (voir figure 8a). Deux méplats 19 et 20 sont réalisés dans cette préforme (figure 8b).

Des rainures parallèles à l'axe de la préforme sont réalisées. Les rainures 40,41 sont réalisées dans la surface cylindrique restante de la préforme. Les rainures 42,43 sont réalisées dans les méplats 19 et 20. Ces rainures sont situées symétriquement par rapport à l'axe de la préforme.

Dans les rainures 42 et 43 sont logés des barreaux 45,46 qui serviront de matériaux de contrainte. Le matériau des barreaux 45,46 est choisi de manière, qu'après avoir été chauffé pour l'opération de fibrage, qui sera décrite ultérieurement, lors du refroidissement le matériau a tendance à se dilater.

Par exemple le matériau choisi peut être de la silice dopée au titane.

De part et d'autre des méplats 19 et 20 sont placés des pièces en forme de portions de cylindre 47,48 qui reconstituent la forme cylindrique de la préforme. L'ensemble est ensuite placée dans un tube 49 en matériau identique ou similaire à celui de la matrice.

La préforme ainsi obtenue est soumise à une opération de fibrage connue dans la technique. On obtient une fibre dont la section se présente tel que cela est représenté en figure 7.

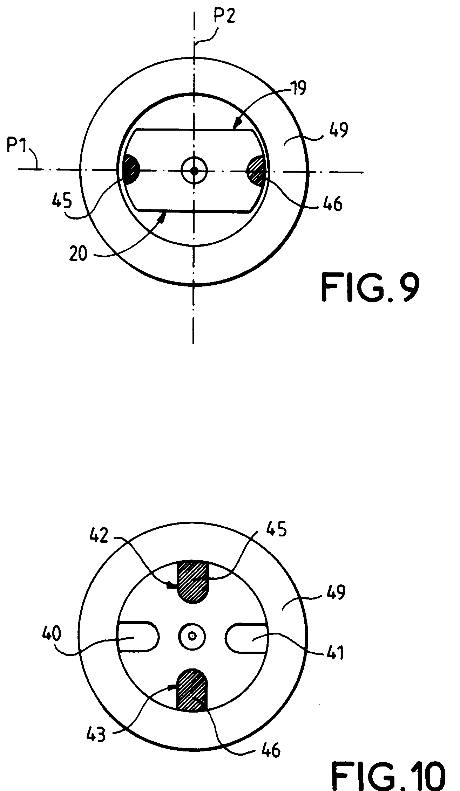

Selon une variante du procédé de l'invention représentée en figure 9, on ne prévoit pas les rainures 42,43, et les barreaux 45,46 sont placés dans les rainures 40,41. On ne prévoit pas de pièces 47,48 de part et d'autre des méplats 19,20. L'ensemble est placé dans le tube 49 et les espaces laissés libres entre les méplats et le tube 49 servent à faire les trous de la fibre.

Selon une autre variante du procédé de l'invention représentée en figure 10, on ne réalise pas les méplats 19,20. Les rainures 40,41,42,43 sont réalisées dans la périphérie cylindrique de la préforme. Les barreaux 45 et 46 sont placés dans les rainures 42,43. L'ensemble est ensuite placé dans le tube 49 et on effectue enfin l'opération de fibrage.

Il est bien évident que la description qui précède n'a été fournie qu'à titre d'exemple. D'autres variantes peuvent être envisagées sans sortir du cadre l'invention. Notamment, les exemples de matériaux ou les formes des différents éléments dessinés sur les figures n'ont été fournis que pour illustrer la description.

## Revendications

1. Fibre optique comprenant un coeur de guidage (1) compris dans une gaine de guidage (2) d'indice de réfraction inférieur au coeur de la gaine et comprenant à proximité du coeur, tout au long de la fibre, au moins une cavité (3 et 4), caractérisée en ce qu'elle comprend également, tout au long de la fibre, entre chaque cavité (3, 4) et le coeur de la fibre (1), une zone de contrainte (5, 6) créant une anisotropie de contrainte et soumettant le coeur de la fibre à une contrainte d'extension.

2. Fibre optique comprenant un coeur de guidage (1) compris dans une gaine de guidage (2) d'indice de réfraction inférieur au coeur de la gaine et comprenant à proximité du coeur, tout au long de la fibre, au moins une cavité (40,41) située dans un premier plan de symétrie (P1) de la fibre, caractérisé en ce qu'elle comprend également, tout au long de la fibre, dans un deuxième plan de symétrie (P2) perpendiculaire au premier, au moins une zone de contrainte (45,46) créant une anisotropie de contrainte et soumettant le coeur de la fibre à une contrainte de compression.

3. Fibre optique selon l'une des revendications 1 ou 2, caractérisée en ce que la zone de contrainte (5, 6) est en matériau à coefficient d'expansion thermique différent de celui du matériau de la gaine de guidage (2).

4. Fibre optique selon la revendication 3 caractérisée en ce que la zone de contrainte (5, 6) est en matériau à coefficient d'expansion thermique supérieur à celui du matériau de la gaine de guidage (2).

5. Fibre optique selon l'une des revendications 1 ou 2, caractérisé en ce que la fibre comprend deux cavités (3, 4) situées de part et d'autre du coeur (1) et une zone de contrainte (5, 6) située entre chaque cavité de le coeur.

6. Fibre optique selon l'une des revendications 1 ou 2, caractérisé en ce que la gaine est en silice (2), et les zones de contraintes (5, 6) sont en silice fortement dopée.

7. Filtre optique selon la revendication 2, caractérisé en ce qu'elle comporte deux cavités (40,41) symétriques par rapport à l'axe de la fibre et deux zones de contraintes (45,46) symétriques par rapport à l'axe de la fibre.

8. Procédé de fabrication de fibre optique selon lequel on fabrique une préforme comprenant une gaine de guidage (12) entourant un coeur de guidage (11) compris dans une matrice (30), caractérisé en ce qu'on usine dans la préforme, deux rainures (21, 22) situées de part et d'autre du coeur (11) ; on place dans chaque rainure un barreau (15, 16) en matériau différent de la gaine de guidage ; on recouvre chaque barreau par une plaque (17, 18) en matériau identique à celui de la matrice ; on entoure l'ensemble par un tube (21) d'un matériau similaire à celui de la matrice de telle sorte qu'un espace vide existe entre chaque plaque et le tube; on procède à une opération de fibrage de la préforme.

9. Procédé de fabrication de fibre optique selon la revendication 8, caractérisé en ce que la matrice (30) est en silice et les barreaux (15, 16) sont en silice fortement dopée.

10. Procédé de fabrication de fibre optique selon la revendication 8, caractérisé en ce que l'usinage des rainures (21, 22) comprenne une phase d'usinage de deux méplats (19, 20) dans la préforme de chaque côté du coeur (11) et une phase d'usinage dans ces méplats de deux rainures (21, 22) diamétralement opposées par rapport au coeur (11).

11. Procédé de fabrication de fibre optique selon la revendication 10, caractérisé en ce que chaque plaque (17, 18) a les dimensions d'un méplat (19, 20).

12. Procédé de fabrication de filtre optique selon lequel on fabrique une préforme comprenant une gaine de guidage (12) entourant un coeur de guidage (11) compris dans une matrice (30) caractérisé en ce qu'on usine dans la préforme deux premières rainures (40,41) longitudinales, localisées autour d'un premier plan (P1) de symétrie de la fibre et symétriques par rapport à l'axe de symétrie de la fibre, ainsi que deux deuxièmes rainures (42,43) localisées autour d'un deuxième plan de symétrie (P2) perpendiculaire au premier plan (P1) et symétriques par rapport à l'axe de symétrie de la fibre ; ensuite les deuxièmes rainures (42,43) sont remplies d'un matériau de contrainte (45,46) ; puis l'ensemble est placé dans tube et est enfin soumis à une opération de fibrage.

13. Procédé de fabrication selon la revendication 12 caractérisé en ce qu'avant de réaliser les deuxièmes rainures (42,43) on réalise des méplats dans lesquels sont faites ensuite les deuxièmes rainures (42, 43), et en ce qu'après avoir rempli ces deuxièmes rainures d'un matériau de contraintes on place contre les méplats (19, 20), des pièces (47, 48) ayant pour rôle de restituer la forme cylindrique de la préforme.
